# EUROPEAN PATENT APPLICATION

(11) **EP 4 686 550 A1**
(43) Date of publication of application: **04.02.2026**
(21) Application number: 25179060.6
(22) Date of filing: 27.05.2025
(51) Int. Cl.: B29C 67/20, B29C 70/66, C08J 9/32

(54) **SYNTACTIC-FOAM PARTS MADE OF PRE-MADE SYNTACTIC-FOAM COMPONENTS**

(30) Priority: 30.07.2024 US 202418789292
(71) Applicant: The Boeing Company, Arlington, VA 22202 (US)
(72) Inventor: WILKENSKI, Mark, Arlington, 22202 (US); GREGERSEN, Kimberly-Alice, Arlington, 22202 (US)
(74) Representative: Boult Wade Tennant LLP

(57) **Abstract**

A method (700) of making a syntactic-foam part (142) that includes loading (702) a first pre-made component (104) into a mold (102) such that an interstitial space (132) is defined between the first pre-made component (104A) and at least one of a second pre-made component (104B) within the mold and an inner perimeter (106) of the mold. The first pre-made component includes low-density spheres (120) embedded in a first resin (138) that has been solidified. The method also includes introducing (704) a second resin (140) into the interstitial space. The method further includes solidifying (706) the second resin after the second resin is introduced into the interstitial space.

## Description

### FIELD

This disclosure relates generally to buoyancy foams, and more particularly to foam parts with pre-made components.

### BACKGROUND

Buoyancy foams are incorporated into parts to promote buoyancy of the part within a higher density fluid. Some parts that incorporate buoyancy foams include, but are not limited to, submarines, watercraft, oil drilling rigs and components, and other marine applications. Typical buoyancy foams are water resistant, durable, reliable, and, in some cases, compression resistant. Making buoyancy foams that have these characteristics, using an efficient, a cost-effective, and a reliable manufacturing process, can be difficult.

### SUMMARY

The subject matter of the present application has been developed in response to the present state of the art, and in particular, in response to the shortcomings of conventional buoyancy foams and conventional methods of making such buoyancy foams, that have not yet been fully solved by currently available techniques. Accordingly, the subject matter of the present application has been developed to provide syntactic-foam parts and corresponding methods of making such parts that overcome at least some of the above-discussed shortcomings of prior art techniques.

The following is a non-exhaustive list of examples, which may or may not be claimed, of the subject matter, disclosed herein.

The subject matter of the following paragraph constitutes example 1 of the present disclosure. Example 1 includes a method of making a syntactic-foam part. The method includes loading a first pre-made component into a mold such that an interstitial space is defined between a first pre-made component and at least one of a second pre-made component within the mold and an inner perimeter of the mold. The first pre-made component includes low-density spheres embedded in a first resin that has been solidified. The method also includes introducing a second resin into the interstitial space. The method further includes solidifying the second resin after the second resin is introduced into the interstitial space.

The subject matter of the following paragraph constitutes example 2 of the present disclosure. According to example 2, which encompasses example 1, above, the method may include, before loading the first pre-made component into the mold, depositing and solidifying a material along the inner perimeter of the mold and forming an opening through the material. Introducing the second resin into the interstitial space may include inserting the second resin through the opening.

The subject matter of the following paragraph constitutes example 3 of the present disclosure. According to example 3, which encompasses any of examples 1-2, above, the second resin, after being solidified, and the first pre-made component may form an intermediate part. The mold may be a first mold, and the method may further include removing the intermediate part from the first mold. The method may include inserting the intermediate part into a second mold and depositing a material within the second mold and solidifying the material.

The subject matter of the following paragraph constitutes example 4 of the present disclosure. According to example 4, which encompasses any of examples 1-3, above, the method may include introducing second low-density spheres into the interstitial space along with the second resin so that the second low-density spheres are embedded in the second resin. Solidifying the second resin may include solidifying the second resin with the second low-density spheres embedded within the second resin.

The subject matter of the following paragraph constitutes example 5 of the present disclosure. According to example 5, which encompasses any of examples 1-4, above, the first pre-made component may include a spacer extending from a side of the first pre-made component a distance corresponding to a desired gap between the first pre-made component and at least one of the second pre-made component and the inner perimeter of the mold. The spacer may engage the corresponding one of the second pre-made component and the inner perimeter of the mold to maintain the first pre-made component at the desired gap from the corresponding one of the second pre-made component and the inner perimeter of the mold.

The subject matter of the following paragraph constitutes example 6 of the present disclosure. According to example 6, which encompasses example 5, above, the desired gap may be between, and inclusive of, 0.1 centimeters (cm) and 1.5 cm.

The subject matter of the following paragraph constitutes example 7 of the present disclosure. According to example 7, which encompasses any of examples 1-6, above, the second resin, when introduced into the mold, may fill the interstitial space.

The subject matter of the following paragraph constitutes example 8 of the present disclosure. According to example 8, which encompasses any of examples 1-7, above, the first pre-made component and the second pre-made component may be pre-made components of a plurality of pre-made components. Loading the first pre-made component into the mold may include loading the plurality of pre-made components into an interior cavity of the mold. When loaded into the interior cavity of the mold, the pre-made components may occupy at least 25% of a total volume of the interior cavity.

The subject matter of the following paragraph constitutes example 9 of the present disclosure. According to example 9, which encompasses any of examples 1-8, above, the method may include forming a third pre-made component. The third pre-made component may have at least one of: a density higher than a density of the first pre-made component and the second pre-made component; a strength greater than a strength of the first pre-made component and the second pre-made component; or a durability greater than a durability of the first pre-made component and the second pre-made component. The method may include loading the third pre-made component into the mold. The interstitial space may be further defined between the third pre-made component and at least one of the first pre-made component and the second pre-made component.

The subject matter of the following paragraph constitutes example 10 of the present disclosure. According to example 10, which encompasses example 9, above, the third pre-made component may include a plurality of third pre-made components. The plurality of third pre-made components may be loaded into the mold such that the plurality of third pre-made components are closer to the inner perimeter of the mold than the first pre-made component and the second pre-made component are to the inner perimeter of the mold.

The subject matter of the following paragraph constitutes example 11 of the present disclosure. Examples of the present disclosure include a syntactic-foam part. The syntactic-foam part includes pre-made components each having low-density spheres at least partially embedded in a first resin. The pre-made components are arranged so that an interstitial space is defined between at least two adjacent ones of the pre-made components. The syntactic-foam part also includes a second resin located within the interstitial space.

The subject matter of the following paragraph constitutes example 12 of the present disclosure. According to example 12, which encompasses example 11, above, the second resin may bind together the pre-made components.

The subject matter of the following paragraph constitutes example 13 of the present disclosure. According to example 13, which encompasses any of examples 11-12, above, the syntactic-foam part may include second low-density spheres within the interstitial space and embedded within the second resin such that the second resin and the second low-density spheres fill the interstitial space.

The subject matter of the following paragraph constitutes example 14 of the present disclosure. According to example 14, which encompasses any of examples 11-13, the syntactic-foam part may include a spacer extending from a side of a first pre-made component of the pre-made components and contacting a side of a second pre-made component of the pre-made components.

The subject matter of the following paragraph constitutes example 15 of the present disclosure. According to example 15, which encompasses example 14, the spacer may provide at least one of thermal conductivity or electrical conductivity between the first pre-made component and the second pre-made component.

The subject matter of the following paragraph constitutes example 16 of the present disclosure. According to example 16, which encompasses any of the examples 11-15, the foam part may include a number of additional pre-made components. Each one of the number of additional pre-made components may have at least one of a density higher than a density of the pre-made components, a strength greater than a strength of the pre-made components, or a durability greater than a durability of the pre-made components. A distance between each one of the number of additional pre-made components and an outer surface of the syntactic-foam part may be less than a distance between any one of the pre-made components and the outer surface of the syntactic-foam part.

The subject matter of the following paragraph constitutes example 17 of the present disclosure. According to example 17, which encompasses any of examples 11-16, above, each one of the pre-made components may have a shape the same as or substantially similar to one of a triangular prism, a pyramid, a rectangular prism, a bar, a cylinder, a sphere, a dodecahedron, a hexagonal prism, or a cuboid.

The subject matter of the following paragraph constitutes example 18 of the present disclosure. According to example 18, which encompasses any of examples 11-17, above, at least one of the pre-made components may include an electronic component.

The subject matter of the following paragraph constitutes example 19 of the present disclosure. According to example 19, which encompasses any of examples 11-18, above, the low-density spheres may be substantially hollow.

The subject matter of the following paragraph constitutes example 20 of the present disclosure. According to example 20, which encompasses any of examples 11-19, above, at least one of the pre-made components may have a shape that is different than an overall shape of the syntactic-foam part.

The described features, structures, advantages, and/or characteristics of the subject matter of the present disclosure may be combined in any suitable manner in one or more examples. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example. In other instances, additional features and advantages may be recognized in some examples that may not be present in all examples. Further, in some instances, well-known structures, materials, or operations are not shown or described in detail to avoid obscuring features of the subject matter of the present disclosure. The features and advantages of the subject matter of the present disclosure will become more fully apparent from the following description and appended claims, or may be learned by the practice of the subject matter as set forth hereinafter.

### BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings, which are not necessarily drawn to scale, depict only certain examples of the subject matter and are not therefore to be considered to be limiting of its scope, the subject matter will be described and explained with additional specificity and detail through the use of the drawings, in which:
Figure 1A is a front elevation cross-sectional view of a pre-made component;
Figure 1B is a front elevation cross-sectional view of a mold;
Figure 1C is a front elevation cross-sectional view of pre-made components loaded into a mold;
Figure 1D is a front elevation cross-sectional view of a resin being introduced into a mold;
Figure 1E is a front elevation cross-sectional view of foam part;
Figure 1F is a front elevation cross-sectional view of a foam part being introduced into a mold;
Figure 1G is a front elevation cross-sectional view of a foam part including a solidifying material;
Figure 2 is a top perspective view of a foam part;
Figure 3 is a front elevation cross-sectional view of a foam part with triangular prism-shaped, pre-made components;
Figure 4 is a front elevation cross-sectional view of a foam part with spherical-shaped, pre-made components;
Figure 5A is a schematic diagram illustrating one step of a method of forming a foam part with pre-made components;
Figure 5B is a schematic diagram illustrating another step of a method of forming a foam part with pre-made components;
Figure 5C is a schematic diagram illustrating yet another step of a method of forming a foam part with pre-made components;
Figure 5D is a schematic diagram illustrating a further step of a method of forming a foam part with pre-made components;
Figure 5E is a schematic diagram illustrating an additional step of a method of forming a foam part with pre-made components;
Figure 5F is a schematic diagram illustrating another step of a method of forming a foam part with pre-made components;
Figure 5G is a schematic diagram illustrating yet another step of a method of forming a foam part with pre-made components;
Figure 6 is a front elevation cross-sectional view of a foam part having a pre-made part and an electronic component; and
Figure 7 is a schematic flow chart of a method of making a foam part.

### DETAILED DESCRIPTION

Reference throughout this specification to "one example," "an example," or similar language means that a particular feature, structure, or characteristic described in connection with the example is included in at least one example of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the present disclosure, however, absent an express correlation to indicate otherwise, an implementation may be associated with one or more examples.

Some conventional methods for making syntactic foams include stacking low-density spheres into a mold in contact with each other. The mold is then infused with a resin, which embeds the spheres. The resin is then cured. As the resin is cured, it releases heat. If the size of the syntactic-foam part is too large, the released heat does not escape the syntactic-foam part easily, since foam has low thermal conductivity. Such increases in local temperature can increase the cure rate, which in turn accelerates the generation of heat by the resin. As such, current methods are limited in the size of syntactic-foam parts that can be produced.

Described herein are examples of a method of making syntactic-foam parts made of low-density spheres embedded in a resin that reduces thermal issues without the size constraints of conventional methods. Practicing the method results in a syntactic-foam part that is not subject to the same size restrictions as conventional syntactic-foam parts. The method can also result in syntactic-foam parts with components having different chemical or physical properties. Certain examples of the method include loading pre-made components into a mold. The pre-made components include syntactic-foam parts. Certain methods include introducing a resin into an interstitial space between the pre-made components in the mold and solidifying the resin.

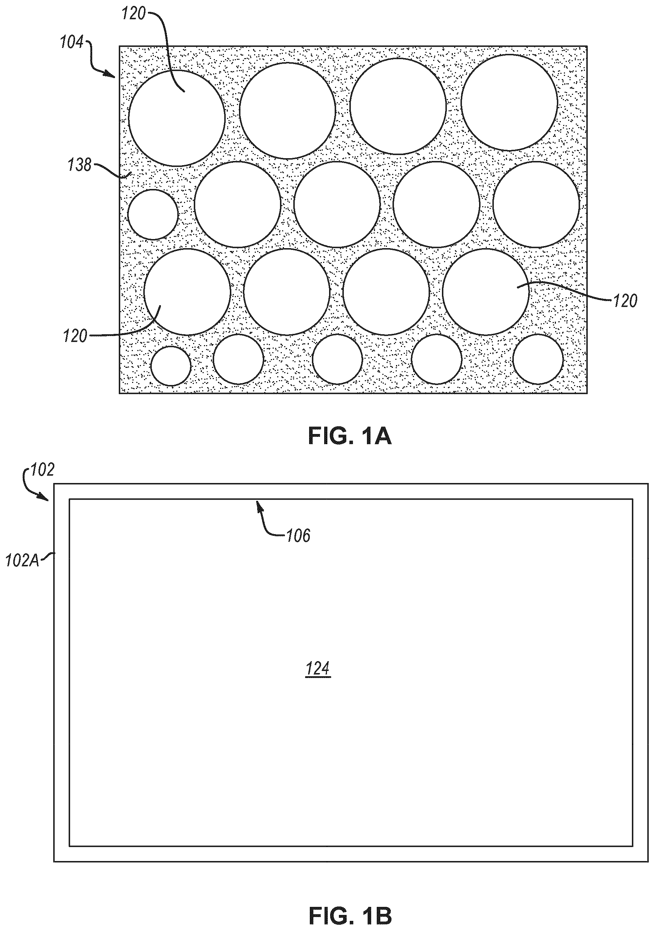

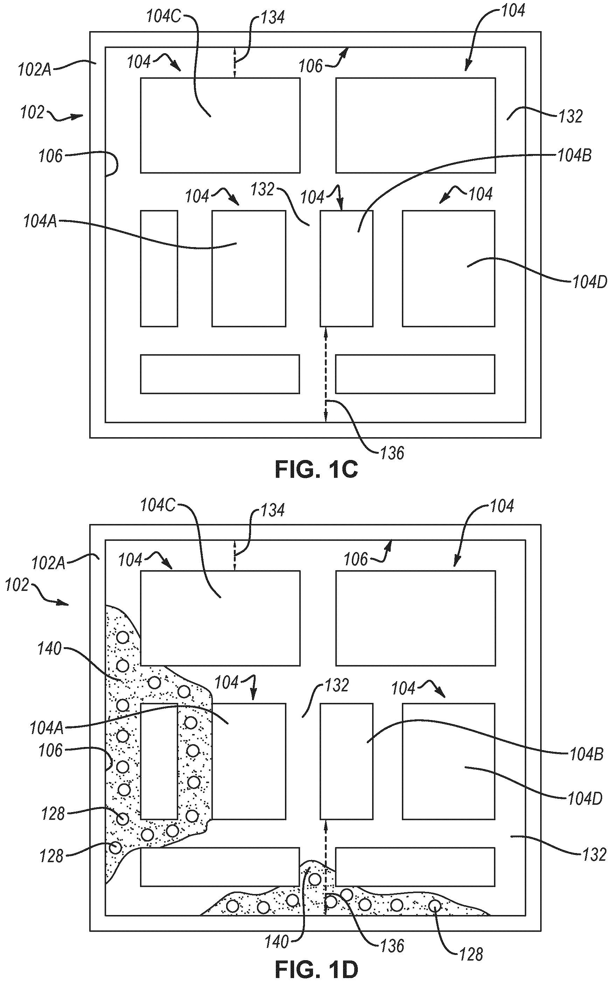

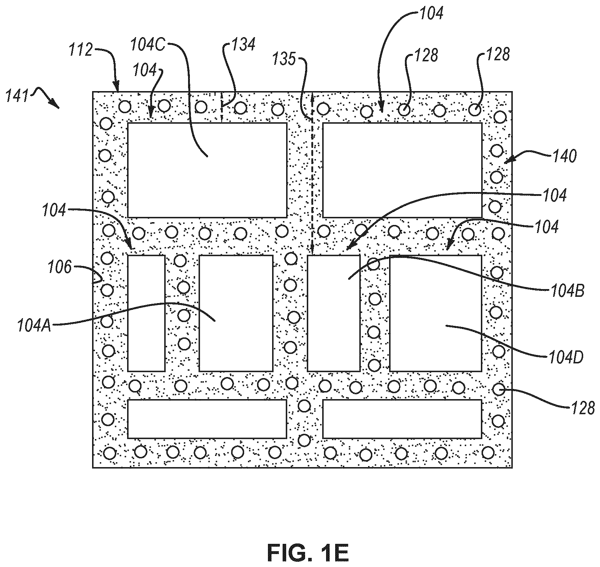

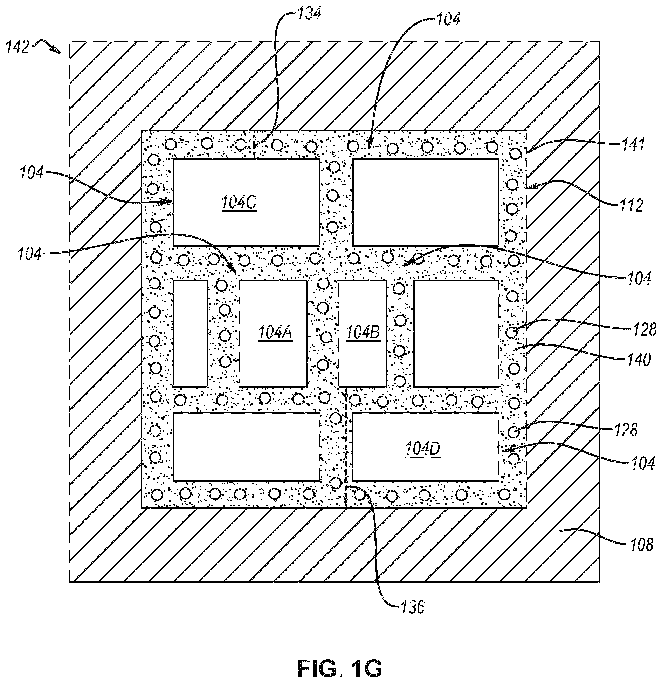

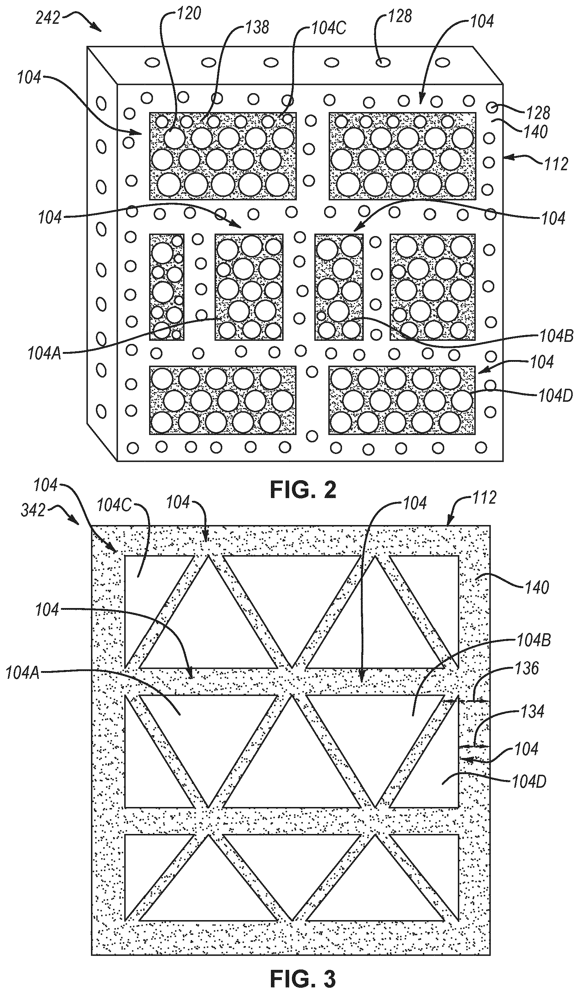

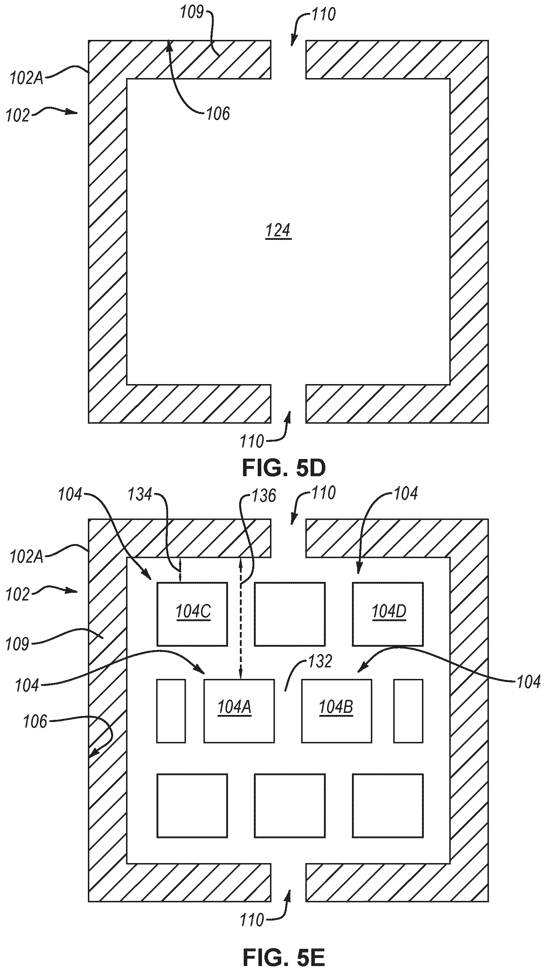

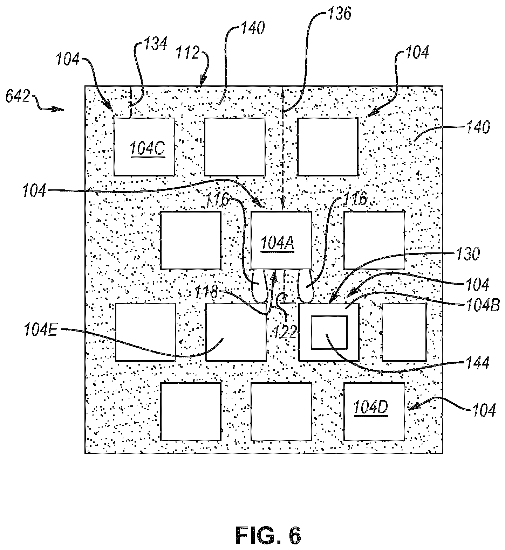

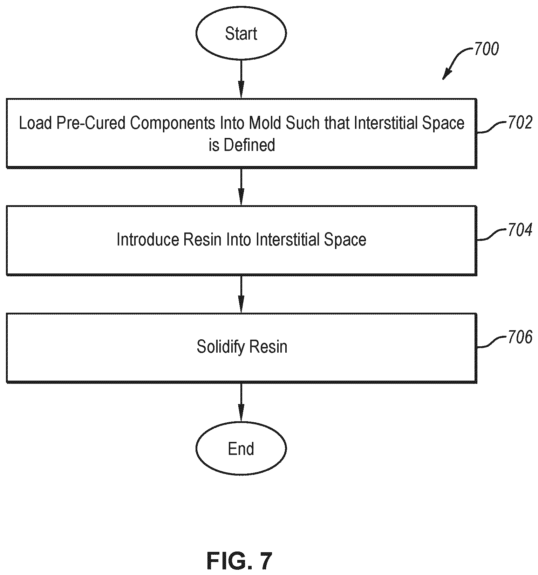

According to some examples, a method 700 of making a syntactic-foam part, such as the intermediate syntactic-foam part 141 of Figure 1E, the syntactic-foam part 142 of Figure 1G, the syntactic-foam part 242 of Figure 2, the syntactic-foam part 342 of Figure 3, and/or the syntactic foam part 642 of Figure 6, is shown in Figure 7. Referring generally to Figure 7 and specifically to Figures 1C and 5E, the method 700 includes (block 702) loading pre-made components 104 into a first mold 102A. In some examples, each one of the pre-made components 104 includes low-density spheres 120 embedded in a first resin 138 (see, e.g., Figures 1A and 2), which is cured. Although Figures 1C and 5E show a plurality of pre-made components 104, examples of the present disclosure are not so limited. In some examples, only a first pre-made component 104A is loaded into the mold 102, and the syntactic-foam part 141 and/or 142 includes only a single pre-made component 104A.

In various examples, the method 700 includes forming each of the pre-made components 104 by the loading low-density spheres 120 into a smaller mold. In some examples, the method 700 includes introducing the first resin 138 into the smaller mold and curing the first resin 138. In yet some examples, the method 700 includes introducing the first resin 138 into the smaller mold such that the first resin 138 coats the low-density spheres 120. In certain examples, the pre-made component 104 is then cured, removed from the smaller mold and introduced into the first mold 102A with the other pre-made components 104.

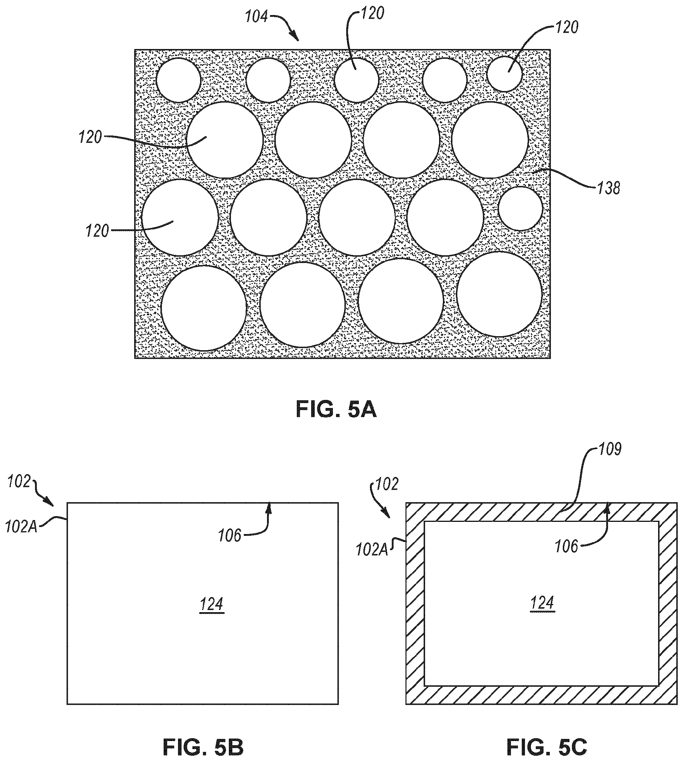

Referring to Figures 1A and 5A, in some examples, one or more of the pre-made components 104 has a shape that is substantially similar to a rectangular prism. In some examples, one or more of the pre-made components 104 has a shape that is the same as or substantially similar to one of: a triangular prism, a pyramid, a rectangular prism, a bar, a cylinder, a sphere, a dodecahedron, a hexagonal prism, a cuboid, and/or a combination thereof. In some examples, the pre-made components 104 has a shape that at least partially surrounds a portion of a cylinder. At least one pre-made component 104 includes a surface that has a curvature that corresponds or substantially corresponds to a circumference of a cylinder, such as a circumference of a cylindrically-shaped pre-made component 104. In various examples, the at least one pre-made component has a shape that is the same as or substantially similar to a rectangular and/or triangular prism, except for the portion that is curved to correspond to the curvature of the cylinder. In some examples, the at least one pre-made component 104 includes a portion having a shape that corresponds to an exterior surface of a sphere. The at least one pre-made component 104 can include a rectangular prism-shaped pre-made component 104 with a portion configured to at least partially surround a portion of a sphere, such as another pre-made component 104 that has a shape the same as or substantially similar to a sphere. The pre-made components 104 can each have shapes the same as or substantially similar to each other. In other examples, the pre-made components 104 have a variety of different shapes.

Each one of the pre-made components 104 includes, in some examples, components made of syntactic foams. In some examples, each one of the pre-made components 104 has similar physical and/or chemical properties. In other examples, the pre-made components 104 have different physical and/or chemical properties. The pre-made components 104, in various examples, are made of a material selected to attenuate noise and/or absorb particular frequencies. In some examples, the pre-made components 104 are coated with a material, such as a thermally and/or electrically conductive material.

The first resin 138 can be any of various types of resin conducive to coating, embedding, and/or binding low-density spheres. According to some examples, the first resin 138 is one or more of a pure resin material (e.g., epoxy resin), a pre-ceramic resin (e.g., silane pre-ceramic resin), a resin matrix composite material (i.e., reinforcement materials embedded in a matrix material), nanoscale materials introduced via a slip cast process, glass, water glass (e.g., sodium silicate), a high-modulus polymer (e.g., highly cross-linked stiff-chain polymer, nano-particle loaded polymer, colloidal silica nanoparticle loaded polymer, and/or crystalline polymers), a vinyl-ester resin, a polyester resin, and/or the like. The reinforcement materials of the resin matrix composite material can be any of various materials, such as fumed silica, nano-particles, milled carbon fibers, and/or the like. In certain examples, the first resin 138 includes a solvent that helps thin the first resin 138 and promote coating of the low-density spheres.

In some examples, the mold 102 includes a selectively openable lid that selectively covers an opening in the mold 102 through which the pre-made components 104 can be loaded into the mold 102. Referring to Figures 1B and 1C, the mold 102 can be a first mold 102A that includes an inner cavity 124 and an inner perimeter 106 enclosing the inner cavity 124. Referring to Figure 5D, in some examples, the first mold 102A includes one or more openings 110 through which the pre-made components 104 can be introduced into the first mold 102A. Referring to Figure 5C, in some examples, the method 700 includes, before loading the pre-made components 104 into the first mold 102A, depositing and solidifying a pre-cured material 109 along the inner perimeter 106 of the first mold 102A. The method 700 can also include forming an opening 110 through the pre-cured material 109. In various examples, the pre-cured material 109 becomes part of a final syntactic-foam part 142 product. In such examples, the method 700 includes removing the pre-cured material 109 from the first mold 102A with the pre-made components 104 and the solidified second resin 140 (such as the solidified second resin 140 shown in Figure 1D). In some examples, the pre-cured material 109 is a pre-cured foam material.

Referring to Figure 1C, an interstitial space 132 is defined between a first pre-made component 104A of the pre-made components 104 and at least one of: (1) a second pre-made component 104B of the pre-made components 104; and (2) an inner perimeter 106 of the mold 102. Because the illustrations show the pre-made components 104 in 2-dimensional space, each interstitial space 132 is shown defined by just two of the pre-made components 104. However, as can be recognized, the arrangement of pre-made components 104, when considered in 3-dimensional space, would have pre-made components 104 into the page and/or pre-made components 104 out of the page. Accordingly, in 3-dimensional space, each interstitial space 132 can be further defined by one or two additional pre-made components 104.

Referring to Figures 1B-1D and Figures 5B-5E, in some examples, the first mold 102A forms part of a molding tool, which further includes a resin introduction system operable to introduce a second resin 140 (see, e.g., Figure 1D) into the interior cavity 124 of the first mold 102A. In some examples, the first-resin introduction system includes an inlet and/or an outlet. The inlet is operable to introduce the second resin 140, from a source of the introduction system, into the interior cavity 124. The outlet is operable to drain excess resin from the interior cavity 124. Each one of the inlet and the outlet can include a valve that is selectively operable to regulate the flow of the second resin 140 into and out of the interior cavity 124, respectively.

The size and shape of the interior cavity 124 of the first mold 102A defines the size and shape of the intermediate syntactic-foam part 141. In some examples, the size and shape of the interior cavity 124 can be dependent on the size of the pre-made components 104, or vice versa. It is noted that the pre-made components 104, low-density spheres 120, and the first mold 102A are not necessarily to scale. For example, in the illustrated renderings, the size of the low-density spheres 120 is abnormally large relative to the size of the pre-made component 104 for better clarity in showing and describing the examples. In practice, the size of the low-density spheres 120 will be much smaller relative to the size of the pre-made component 104 than as depicted. In some examples, the maximum diameter of the low-density spheres 120 is between, and inclusive of, 5 microns and 153 millimeters (mm), such as between, and inclusive of, 20 microns and 10,000 microns in certain examples, such as between, and inclusive of, 25 microns and 5,000 microns in one example, such as between, and inclusive of, 250 microns and 35,000 in another example, and between, and inclusive of, 500 microns and 1,000 microns in yet another example.

According to some examples, each one or at least one of the low-density spheres 120 is a hollow sphere. The hollow sphere has a thin-walled construction. In other words, a thickness of the sidewall is smaller than the diameter of the low-density sphere 120. In some examples, a ratio of the thickness to the diameter is between, and inclusive of, .001 and 0.1, such as between, and inclusive of, 0.01 and 0.1 in one example, and between, and inclusive of, 0.02 and 0.08 in another example. The hollow sphere can be made of any of various materials, such as, but not limited to, glass, ceramic, polymer, and/or the like. In alternative examples, each one or at least one of the low-density spheres 120 is a non-hollow foam sphere. The foam sphere does not have a single hollow space, such as with the hollow sphere. Rather, the foam sphere is made of a solid piece of foam, which has multiple hollow spaces in the form of multiple open or closed cells. In some examples, the foam of the foam sphere is one or more of polystyrene foam, expanded polystyrene (EPS) foam, polyethylene foam, polyurethane foam, and/or any of various other types of foam.

As used herein, in certain examples, a low-density sphere 120 is a hollow or non-hollow sphere having a density of between, and inclusive of, 0.005 g/cm³ and 0.6 g/cm³, such as between, and inclusive of, 0.05 g/cm³ and 0.4 g/cm³ in one example, and between, and inclusive of, 0.1 g/cm³ and 0.3 g/cm³ in another example, between and inclusive of, 0.02 g/cm³ and 0.15 g/cm³ in yet another example, and between, and inclusive of, 0.015 g/cm³ and 0.03 g/cm³ in a further example.

Although not shown, in some examples, the low-density spheres 120 can be pre-coated with a uniform coating before being loaded into the smaller mold. The uniform coating has a constant (i.e., non-variable) thickness across the sphere. The uniform coating can be made of any of various materials, such as, but not limited to, a pre-ceramic material, polymer, ceramic, and/or the like. In some cases, such as when the low-density sphere 120 is a non-hollow foam sphere, the uniform coating can provide strength and/or an increased thermal stability to the underlying sphere.

In some examples, all the pre-made components 104 loaded into the first mold 102A at block 702 have the same size. However, in other examples, such as shown in Figure 1C, the pre-made components 104 loaded into the first mold 102A at block 702 can have different sizes and can be loaded into the mold 102 at separate times corresponding to their sizes.

In some examples, the pre-made components 104, when introduced into the interior cavity 124 of the first mold 102A, occupy at least 25% of the total volume of the interior cavity 124. In some examples, the pre-made components 104 occupy not less than 25% and not greater than 99% of the total volume of the interior cavity 124. In some examples, the pre-made components 104 occupy not less than 50% and not greater than 99% of the total volume of the interior cavity 124.

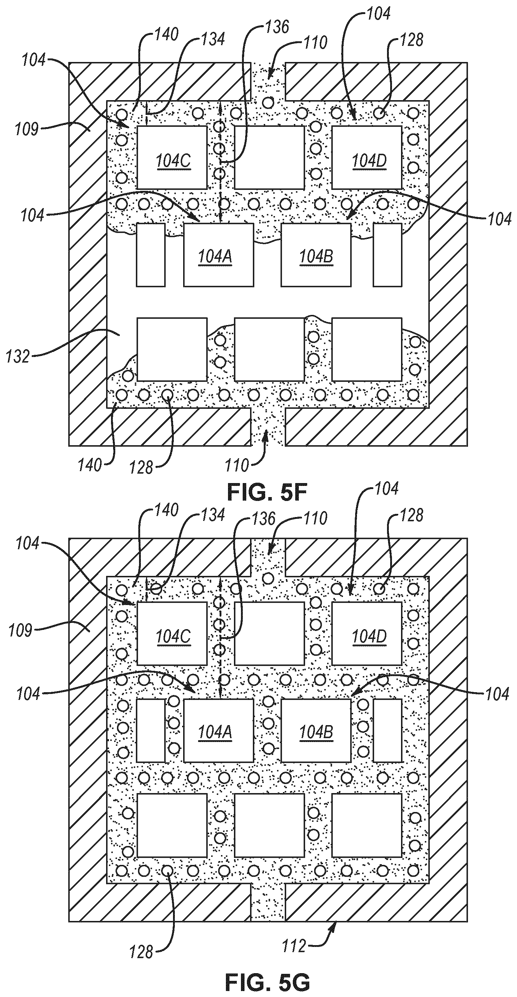

As shown generally in Figure 7 and specifically in Figures 1D and 5F, the method 700 additionally includes (block 704) introducing a second resin 140 into the first mold 102A. In some examples, the method 700 includes introducing 704 the second resin 140 into the first mold 102A after the pre-made components 104 are loaded into the first mold 102A at block 702. In other examples, the method 700 includes loading 702 the pre-made components 104 and introducing the second resin 140 into the first mold 102A concurrently.

In some examples, the second resin 140 is passively gravity-fed through the first mold 102A in the top-to-bottom or generally top-to-bottom direction. However, in other examples, the flow of the second resin 140 through the mold 102A is actively pushed and/or actively pulled to urge the second resin 140 to flow in the bottom-to-top or generally bottom-to-top direction from the top of the first mold 102A to the bottom of the first mold 102A. According to one example, the second resin 140 can be actively pushed via positive pressure introduced at the bottom of the first mold 102A, such as via a positive pressure device (e.g., blower, compressor, etc.). In yet one example, the second resin 140 can be actively pulled via a negative pressure introduced at the top of the first mold 102A, such as via a negative pressure device (e.g., a vacuum device). In some examples, rather than flowing from the bottom to the top of the first mold 102A, the second resin 140 flows and/or is actively pushed into the inner cavity 124 from a side of the first mold 102A, such as via the openings 110 shown in Figure 5F.

The second resin 140 can be any of various types of resin conducive to embedding and immobilizing the low-density spheres 120. According to some examples, the second resin 140 is one or more of a pure resin material (e.g., epoxy resin), resin matrix composite material (i.e., reinforcement materials embedded in a matrix material), a high-modulus polymer (e.g., nano-ceramic loaded polymer), colloidal silica nanoparticle loaded resin, vinyl-ester resin, polyester resin, and the like. The reinforcement materials of the resin matrix composite material can be any of various materials, such as fumed silica, nano-particles, milled carbon fibers, and/or the like. According to some examples, the second resin 140 includes density-reducing components, such as smaller low-density spheres (e.g., glass spheres), which helps to reduce the density of the second resin 140 without compromising the strength of the second resin 140.

In some examples, the second resin 140 is made of a material that is the same as and/or similar to a material of which the first resin 138 is made. In other examples, the second resin 140 is different than the first resin 138. For example, the second resin 140 is a different type of resin than the first resin 138, or the second resin 140 is configured differently than the first resin 138. For example, the first resin 138 can be stronger, denser, and/or more durable than the second resin 140. In other examples, the second resin 140 is stronger, denser, and/or more durable than the first resin 138. According to some examples, a cure temperature of the first resin 138 is lower than a cure temperature of the second resin 140. Such a configuration enables the first resin 138 to be cured at a temperature that does not damage the low-density spheres 120. When cured, the first resin 138, which can be stronger, denser, and/or more durable than the low-density spheres 120, protects the integrity of the low-density spheres 120 when the second resin 140 is cured at a higher temperature, such as a temperature that would otherwise soften or damage the low-density spheres 120. Accordingly, in certain examples, the first cure temperature is less than a softening temperature of the low-density spheres 120, and the second cure temperature is higher than the softening temperature of the low-density spheres 120. A softening temperature can be the temperature at which the spheres soften sufficiently so that they no longer carry mechanical load.

In one or more examples, a pre-made component 104 has a stiffness and/or strain capability that is compatible with the stiffness and/or strain capabilities of other pre-made components 104. In various examples, the pre-made component 104 has a stiffness and/or strain capability that is compatible with the stiffness and/or strain capabilities of the second resin 140. Such examples can help to improve the overall strength of the syntactic-foam part 142 and help to prevent breaking upon compression.

In various examples, introducing 704 the second resin 140 into the interstitial space 132 (see, e.g., Figure 1D) includes introducing an additional number of low-density spheres 128 into the interstitial space 132 along with the second resin 140. The additional number of low-density spheres 128 are embedded in the second resin 140. The additional number of low-density spheres 128, together with the second resin 140, fill the interstitial space 132. In various examples, solidifying the second resin 140 includes forming a foam material made of the second resin 140 and the additional number of low-density spheres 128.

In some examples, the method 700 includes introducing the additional number of low-density spheres 128 into the first mold 102A prior to introducing the second resin 140 into the first mold 102A. The additional number of low-density spheres 128 can also be introduced into the first mold 102A prior to the pre-made components 104 being introduced into the first mold 102A.

Referring to Figures 1C, 1D, 5E, and 5F, the second resin 140, when introduced into the mold 102, fills the interstitial space 132. In various examples, the second resin 140 surrounds at least some of the pre-made components 104 and fills interstitial space 132 between the inner perimeter 106 and the pre-made components 104. In some examples, the pre-made components 104 are coated with the second resin 140 as the second resin 140 flows through the first mold 102A and the second resin 140 contacts and adheres to a side 118 of the pre-made components 104. When the second resin 140 is introduced into the first mold 102A, the second resin 140, the additional low-density spheres 128, and the pre-made components 104 together occupy not less than 95% of the volume of the interior cavity 124. In some examples, the second resin 140, the additional low-density spheres 128, and the pre-made components 104 together occupy 100% of the volume of the interior cavity 124. The second resin 140 binds the pre-made components 104 together to form the final product (e.g., the intermediate syntactic-foam part 141 and/or the syntactic-foam part 142).

The method of introducing the second resin 140 can promote adhesion of the second resin 140 to and the coating of the second resin 140 onto the pre-made components 104. Referring to Figure 6, according to a few examples, to promote adhesion of the second resin 140 to the exterior surfaces, the method 700 can also include applying an adhesion-promotion agent onto a side 118 of the pre-made component 104 before the second resin 140 is introduced into the first mold 102A. In some examples, the adhesion-promoting agent is aspirated or vaporized and sprayed into the first mold 102A. The adhesion-promoting agent or wetting agent can be any of various agents configured to promote adhesion, such as, but not limited to silane.

In some examples, the method 700 includes introducing a non-foam material into the first mold 102A prior to solidifying the second resin 140. The non-foam material includes, for example, a composite material added to the edges of the pre-made components 104 to reinforce the pre-made components 104 and to help prevent damage.

Referring generally to Figure 7 and specifically to Figures 1E and 5G, the method 700 additionally includes (block 706) solidifying the second resin 140 as part of a solidification process (e.g., curing process) of the second resin 140. In certain examples, the second resin 140 is solidified at room temperature without additional of external heat. However, in other examples, the tool includes one or more heaters configured to generate heat and direct heat into the mold 102. Solidifying 706 the second resin 140 includes changing the state of the second resin 140 from one state to a harder state (e.g., from a flowable or semi-flowable state to a non-flowable state), such as changing the second resin 140 from a fluid to a solid. According to one example, solidifying 706 the second resin 140 includes partially or fully curing or drying the first resin 138. Fully curing the second resin 140 can include raising the temperature of the second resin 140 to a cure temperature of the second resin 140. To promote complete filling of the interior cavity 124 with the second resin 140, the interior cavity 124 of the first mold 102A can be pressurized. In alternative examples, the second resin 140 is partially or fully cured via alternative methods, such as radiation processing (e.g., ultraviolet radiation processing, electron beam processing, x-ray processing, etc.) of the second resin 140. The solidifying of the second resin 140 can be irreversible (e.g., the second resin 140 can be a thermoset material) or reversible (e.g., the second resin 140 can be a thermoplastic material). When the second resin 140 is a pre-ceramic resin, solidifying the second resin 140 at block 706 can include converting the pre-ceramic resin into a ceramic. According to one example, the second resin 140 can be an electrically and/or thermally conductive resin so that electrical and/or thermal connectivity can be established through the part if desired.

In some examples, and without limitation, the solidification temperature of the second resin 140 is between, and inclusive of, 21°C (i.e., room temperature) and 232°C, such as between, and inclusive of, 21°C and 180°C, in one particular example, between, and inclusive of, 21°C and 125°C, in another particular example, and between, and inclusive of, 21°C and 65°C, in yet another particular example. The second resin 140 is held at the solidification temperature for a predetermined period of time (and/or the second resin 140 can undergo multiple identical or different cure cycles associated with specific temperatures and ramp rates) to effectuate the solidification of the second resin 140.

According to some examples, after the second resin 140 is solidified at block 706, the pre-made components 104 and the second resin 140 form an intermediate syntactic-foam part 141, an example of which is shown in Figure 1E. The intermediate syntactic-foam part 141 includes multiple layers of the pre-made components 104. As shown in Figure 1E, the method 700 can further include removing the intermediate syntactic-foam part 141 from the first mold 102A. The intermediate syntactic-foam part 141, after being removed from the first mold 102A, can form a stand-alone part or be combined with one or more other parts or components to form a larger or more complex part.

In some examples, the intermediate syntactic-foam part 141 is a three-dimensional part, like the syntactic-foam part 242 shown in Figure 2. In various examples, the intermediate syntactic-foam part 141 has a volume between, and inclusive of 0.0023 cubic meters (*m*³), and 0.4 *m*³ and one or more of the pre-made components 104 has a volume between, and inclusive of, 0.00001 and 0.003 *m*³, such as between, and inclusive of, 0.00015 m³ and 0.002 m³, in one particular example.

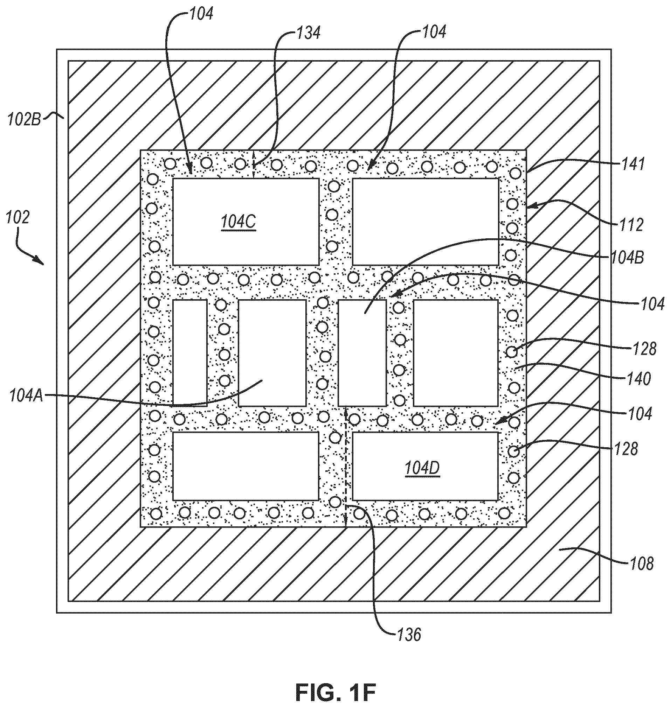

As shown in Figure 1F, the mold 102 can be a second mold 102B. After the intermediate syntactic-foam part 141 is removed from the first mold 102A, the intermediate syntactic-foam part 141 can be introduced into a second mold 102B. In some examples, the method 700 includes placing the first mold 102A, with the intermediate syntactic-foam part 141, within the second mold 102B and subsequently removing the first mold 102A. In some examples, multiple intermediate syntactic-foam parts 141 are introduced into the second mold 102B. The method includes, in certain examples, depositing a reinforcement material 108 into the second mold 102B such that the reinforcement material 108 fills spaces between the exterior surface 112 of the intermediate syntactic-foam part 141 and the second mold 102B. The reinforcement material 108 is solidified. The reinforcement material 108 and the intermediate syntactic-foam part 141 make up a syntactic-foam part 142, which is a final product. The method includes removing the syntactic-foam part 142 from the second mold 102B. In some examples, the reinforcement material 108 includes a foam material. The reinforcement material 108 can be stronger, more durable, and/or more dense than a material of the pre-made components 104 and/or the second resin 140.

In some examples, the first mold 102A and the second mold 102B are different molds. However, in other examples, the first mold 102A and the second mold 102B are the same mold.

Referring to Figures 1F-4, Figures 5E-G, and Figure 6, in some examples, the pre-made components 104 include a first pre-made component 104A, a second pre-made component 104B, a third pre-made component 104C, and a fourth pre-made component 104D. In such examples, the method 700 includes forming the third pre-made component 104C.

In some examples, the third pre-made component 104C and the fourth premade component 104D are loaded into the first mold 102A such that the third pre-made component 104C and the fourth pre-made component 104D are peripheral pre-made components. A distance 134 between the third pre-made component 104C and the inner perimeter 106 of the first mold 102A is less than a distance 135 or 136 between the second pre-made component 104B and the inner perimeter 106 of the first mold 102A and/or the exterior surface 112 of the syntactic-foam part 142.

In some examples, the third pre-made component 104C is more dense than another pre-made component 104 located further from the inner perimeter 106 of the first mold 102A, such as the first pre-made component 104A. The third pre-made component 104C is made of a different material than the first pre-made component 104A. In certain examples, the third pre-made component 104C has a higher strength than a strength of the first pre-made component 104A. The third-premade component 104C, in some examples, is more durable, tougher, more resistant to ultraviolet (UV) radiation, and/or more resistant to moisture.

Referring to Figure 6, in some examples, at least one pre-made components 104A of a syntactic-foam part 142 includes one or more spacers 116 to help maintain a desired distance 122 between the at least one pre-made component 104A and an adjacent pre-made component 104B. A spacer 116 extends outward from a side 118 of the at least one pre-made component 104A at a distance 122 that corresponds to a desired gap between the two pre-made components 104A and 104B. The spacer 116 engages the adjacent pre-made component 104B (e.g., by contacting a side 130 of the adjacent pre-made component 104B) to maintain the distance 122 between the components 104A and 104B. In some examples, another spacer 116 engages a pre-made component 104E adjacent to the adjacent pre-made component 104B in a similar manner. In some examples, a spacer 116 engages with the inner perimeter 106 of the first mold 102A to maintain a desired gap between the at least one pre-made component 104A and the inner perimeter 106. In some examples, the distance 122 is between, and inclusive of, 0.01 centimeters (cm) and 4 cm. For example, the distance 122 is between, and inclusive of, 0.01 cm and 1.5 cm. In other examples, the distance 122 is greater than 4 cm.

In some examples, the spacer 116 is a tab. The spacer 116 can have a shape the same as or substantially similar to, for example, a 2-dimensional rectangle or substantially 2-dimensional rectangle, a rectangular prism, a 2-dimensional half-circle or substantially 2-dimensional half-circle, a half-sphere, and/or any combination thereof. In some examples, the spacer 116 is made of the same material as the at least one pre-made component 104A. In other examples, the spacer 116 is made of a different material than the pre-made component 104A. While the spacer 116 is made of a foam in some examples, in other examples, the spacer 116 is made of a non-foam material.

The spacer 116 can be configured to provide thermal conductivity between the at least one pre-made component 104A and the adjacent pre-made component 104B. In such examples, the spacer 116 is made of a thermally conductive material, such as a metal. In some examples, the spacer 116 is configured to provide electric conductivity between the at least one pre-made component 104A and the adjacent pre-made component 104B. The spacer 116 includes, in one or more examples, one or more openings and/or channels configured to allow wires to be routed through the spacer 116. For example, a wire is routed from the at least one pre-made component 104A, through a channel of the spacer 116, and to the adjacent pre-made component 104B.

The syntactic foam part 642, in some examples, includes an electronic component 144. For example, a pre-made component 104B includes the electronic component 144. In some examples, the pre-made component 104B is formed around the electronic component 144. In other examples, an opening is made in the pre-made component 104B to allow the pre-made component 104B to receive and house the electronic component 144. Channels in the spacer 116 allow for routing of wires from the electronic component 144, through the spacer 116, and to another pre-made component 104A. The electronic component 144 includes, for example: a battery, a power supply, a sensor, a communication device, a navigation device, a sonar device, a lighting element, a depth gauge, and/or any combination thereof. In some examples, one or more of the pre-made components 104 includes and/or houses a component other than an electronic component 144, such as a payload or other cargo and/or a stiffening member.

In some examples, the syntactic-foam part 142 includes a number of elongated members connecting pre-made components 104. The elongated members can each be at least partially embedded in a pre-made component 104 and can connect to an elongated member of another pre-made component 104, either directly or through a connector. The elongated members can be hollow tubes or substantially hollow tubes configured to receive a thermally conductive material, for example. The elongated members can also provide electrical conductivity between the pre-made components 104. In various examples, the elongated members are hollow or substantially hollow and are configured to receive wires routed therein. In other examples, the elongated members are non-hollow rods made of thermally and/or electrically conductive material.

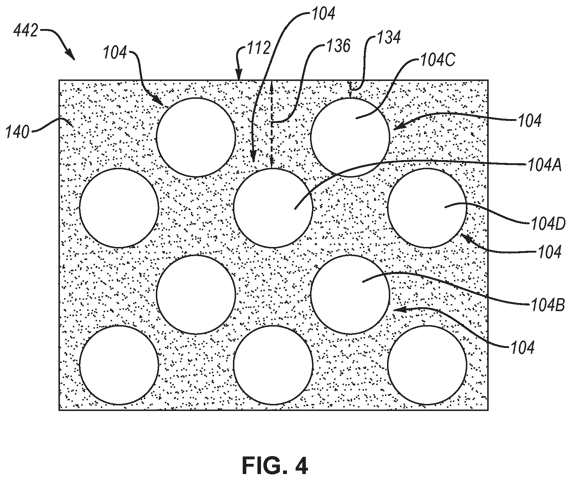

Referring to Figures 3 and 4, in some examples, one or more of the pre-made components 104 has a shape that is different or substantially different from a shape of the syntactic foam part 342 and/or 442. In some examples, as shown in Figure 3, the pre-made components 104 have shapes the same as or substantially similar to triangular prisms and/or pyramids, while the syntactic-foam part 342 has a shape the same as or substantially similar to a rectangular prism and/or cube. Referring to Figure 4, the pre-made components 104 have a shape the same as or substantially similar to a spheres and/or cylinders, and the syntactic-foam part 442 has a shape the same as or substantially similar to a rectangular prism and/or cube. Referring to Figure 2, in other examples, the shape of the pre-made components 104 is the same as or substantially similar to the shape of the syntactic-foam part 242. In some examples, the syntactic-foam part 242 and the pre-made components 104 both have a shape the same as or substantially similar to a rectangular prism. In some examples, an exterior surface 112 of the intermediate foam part 141 and/or syntactic-foam part 242 incudes a curved surface and/or a straight or substantially straight surface.

Referring to Figure 3, in some examples, the pre-made components 104 are stackable in three-dimensional space. As shown in Figure 3, the pre-made components 104 have shapes the same as or substantially similar to triangular prisms that can be stacked and arranged to form compact rows and/or columns of pre-made components 104.

In the above description, certain terms may be used such as "up," "down," "upper," "lower," "horizontal," "vertical," "left," "right," "over," "under" and the like. These terms are used, where applicable, to provide some clarity of description when dealing with relative relationships. But, these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two." Moreover, unless otherwise noted, as defined herein a plurality of particular features does not necessarily mean every particular feature of an entire set or class of the particular features.

The term "about" or "substantially" in some embodiments, is defined to mean within +/-5% of a given value, however in additional embodiments any disclosure of "about" may be further narrowed and claimed to mean within +/- 4% of a given value, within +/- 3% of a given value, within +/- 2% of a given value, within +/- 1% of a given value, or the exact given value. Further, when at least two values of a variable are disclosed, such disclosure is specifically intended to include the range between the two values regardless of whether they are disclosed with respect to separate embodiments or examples, and specifically intended to include the range of at least the smaller of the two values and/or no more than the larger of the two values. Additionally, when at least three values of a variable are disclosed, such disclosure is specifically intended to include the range between any two of the values regardless of whether they are disclosed with respect to separate embodiments or examples, and specifically intended to include the range of at least the A value and/or no more than the B value, where A may be any of the disclosed values other than the largest disclosed value, and B may be any of the disclosed values other than the smallest disclosed value.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other, but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of one example of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

The present subject matter may be embodied in other specific forms without departing from its essential characteristics. The described examples are to be considered in all respects only as illustrative and not restrictive. All changes which come within the meaning and range of the claims are to be embraced within their scope.

The following present further examples:
Example 1. A method (700) of making a syntactic-foam part (142), the method (700) comprising:
   loading a first pre-made component (104) into a mold (102) such that an interstitial space (132) is defined between the first pre-made component (104A) and at least one of a second pre-made component (104B) within the mold (102) and an inner perimeter (106) of the mold (102), wherein the first pre-made component (104a) comprises low-density spheres (120) embedded in a first resin (138) that has been solidified;
   introducing a second resin (140) into the interstitial space (132); and
   solidifying the second resin (140) after the second resin (140) is introduced into the interstitial space (132).
Example 2. The method (700) according to Example 1, further comprising, before loading the first pre-made component (104) into the mold (102):
   depositing and solidifying a material (108) along the inner perimeter (106) of the mold (102); and
   forming an opening (110) through the material (108),
   wherein introducing the second resin (140) into the interstitial space (132) comprises inserting the second resin (140) through the opening (110).
Example 3. The method (700) according to Example 1 or Example 2, wherein the second resin (140), after being solidified, and the first pre-made component (104a) form an intermediate part (141), the mold (102) comprises a first mold (102A), and the method (700) further comprises:
   removing the intermediate part (141) from the first mold (102A);
   inserting the intermediate part (141) into a second mold (102B);
   depositing a material (108) within the second mold (102B); and
   solidifying the material (108).
Example 4. The method (700) according to any preceding Example, further comprising introducing second low-density spheres (128) into the interstitial space (132) along with the second resin (140) so that the second low-density spheres (128) are embedded in the second resin (140), wherein solidifying the second resin (140) comprises solidifying the second resin (140) with the second low-density spheres (128) embedded within the second resin (140).
Example 5. The method (700) according to any preceding Example, wherein the first pre-made component (104A) comprises a spacer (116) extending from a side (118) of the first pre-made component (104A) a distance corresponding to a desired gap between the first pre-made component (104A) and at least one of the second pre-made component (104B) and the inner perimeter (106) of the mold (102), and wherein the spacer (116) engages the corresponding one of the second pre-made component (104B) and the inner perimeter (106) of the mold (102) to maintain the first pre-made component (104A) at the desired gap from the corresponding one of the second pre-made component (104B) and the inner perimeter (106) of the mold (102).
Example 6. The method (700) according to Example 5, wherein the desired gap is between, and inclusive of, 0.1 centimeters (cm) and 1.5 cm.
Example 7. The method (700) according to any preceding Example, wherein the second resin (140), when introduced into the mold (102), fills the interstitial space (132).
Example 8. The method (700) according to any preceding Example, wherein the first pre-made component (104A) and the second pre-made component (104B) comprise pre-made components of a plurality of pre-made components, loading the first pre-made component (104A) into the mold (102) comprises loading the plurality of pre-made components (104) into an interior cavity (124) of the mold (102), and wherein, when loaded into the interior cavity (124) of the mold (102) the plurality of pre-made components (104) occupy at least 25% of a total volume of the interior cavity (124).
Example 9. The method (700) according to any preceding Example, further comprising:
   forming a third pre-made component (104C), wherein the third pre-made component (104C) has at least one of:
   a density higher than a density of the first pre-made component (104A) and the second pre-made component (104B);
   a strength greater than a strength of the first pre-made component (104A) and the second pre-made component (104B); or
   a durability greater than a durability of the first pre-made component (104A) and the second pre-made component (104B); and
   loading the third pre-made component (104C) into the mold (102), wherein the interstitial space (132) is further defined between the third pre-made component (104C) and at least one of the first pre-made component (104A) and the second pre-made component (104B).
Example 10. The method (700) according to Example 9, wherein:
   the third pre-made component (104C) comprises a third pre-made component (104C) of a plurality of additional pre-made components (104C); and
   the plurality of additional pre-made components (104C) are loaded into the mold (102) such that the plurality of additional pre-made components (104C) are closer to the inner perimeter (106) of the mold (102) than the first pre-made component (104A) and the second pre-made component (104B) are to the inner perimeter (106) of the mold (102).
Example 11. A syntactic-foam part (142), comprising:
   pre-made components (104) each comprising low-density spheres (120) at least partially embedded in a first resin (138), wherein the pre-made components (104) are arranged so that an interstitial space (132) is defined between at least two adjacent ones of the pre-made components (104); and
   a second resin (140) located within the interstitial space (132).
Example 12. The syntactic-foam part (142) according to Example 11, wherein the second resin (140) binds together the pre-made components (104).
Example 13. The syntactic-foam part (142) according to Example 11 or Example 12, further comprising second low-density spheres (128) within the interstitial space (132) and embedded within the second resin (140) such that the second resin (140) and the second low-density spheres (128) fill the interstitial space (132).
Example 14. The syntactic-foam part (142) according to any of Examples 11 - 13, further comprising a spacer (116) extending from a side (118) of a first pre-made component (104A) of the pre-made components (104) and contacting a side (130) of a second pre-made component (104B) of the pre-made components (104).
Example 15. The syntactic-foam part (142) according to Example 14, wherein the spacer (116) provides at least one thermal conductivity or electrical conductivity between the first pre-made component (104A) and the second pre-made component (104B).
Example 16. The syntactic-foam part (142) according to any of Examples 11 - 15, wherein:
   the foam part (142) further comprises a number of additional pre-made components (104C);
   each one of the number of additional pre-made components (104C, 104D) has at least one of:
      a density higher than a density of the pre-made components (104);
      a strength greater than a strength of the pre-made components (104); or
      a durability greater than a durability of the pre-made components (104); and
      a distance (134) between each one of the number of additional pre-made components (104C) and an outer surface (112) of the syntactic-foam part (142) is less than a distance (136) between any one of the pre-made components (104) and the outer surface (112) of the syntactic-foam part (142).
Example 17. The syntactic-foam part (142) according to any of Examples 11 - 16, wherein each one of the pre-made components (104) has a shape the same as or substantially similar to one of a triangular prism, a pyramid, a rectangular prism, a bar, a cylinder, a sphere, a dodecahedron, a hexagonal prism, or a cuboid.
Example 18. The syntactic-foam part (142) according to any of Examples 11 - 17, wherein at least one of the pre-made components (104) comprises an electronic component (144).
Example 19. The syntactic-foam part (142) according to any of Examples 11 - 18, wherein the low-density spheres (120) are hollow or substantially hollow.
Example 20. The syntactic-foam part (142) according to any of Examples 11 - 19, wherein at least one of the pre-made components (104) has a shape that is different than an overall shape of the syntactic-foam part (142).

## Claims

1. A method (700) of making a syntactic-foam part (142), the method (700) comprising:
loading (702) a first pre-made component (104) into a mold (102) such that an interstitial space (132) is defined between the first pre-made component (104A) and at least one of a second pre-made component (104B) within the mold (102) and an inner perimeter (106) of the mold (102), wherein the first pre-made component (104a) comprises low-density spheres (120) embedded in a first resin (138) that has been solidified;
introducing (704) a second resin (140) into the interstitial space (132); and
solidifying (706) the second resin (140) after the second resin (140) is introduced into the interstitial space (132).

2. The method (700) according to claim 1, further comprising, before loading the first pre-made component (104) into the mold (102):
depositing and solidifying a material (108) along the inner perimeter (106) of the mold (102); and
forming an opening (110) through the material (108),
wherein introducing the second resin (140) into the interstitial space (132) comprises inserting the second resin (140) through the opening (110).

3. The method (700) according to claim 1 or claim 2, wherein the second resin (140), after being solidified, and the first pre-made component (104a) form an intermediate part (141), the mold (102) comprises a first mold (102A), and the method (700) further comprises:
removing the intermediate part (141) from the first mold (102A);
inserting the intermediate part (141) into a second mold (102B);
depositing a material (108) within the second mold (102B); and
solidifying the material (108).

4. The method (700) according to any preceding claim, further comprising introducing second low-density spheres (128) into the interstitial space (132) along with the second resin (140) so that the second low-density spheres (128) are embedded in the second resin (140), wherein solidifying the second resin (140) comprises solidifying the second resin (140) with the second low-density spheres (128) embedded within the second resin (140).

5. The method (700) according to any preceding claim, wherein the first pre-made component (104A) comprises a spacer (116) extending from a side (118) of the first pre-made component (104A) a distance corresponding to a desired gap between the first pre-made component (104A) and at least one of the second pre-made component (104B) and the inner perimeter (106) of the mold (102), and wherein the spacer (116) engages the corresponding one of the second pre-made component (104B) and the inner perimeter (106) of the mold (102) to maintain the first pre-made component (104A) at the desired gap from the corresponding one of the second pre-made component (104B) and the inner perimeter (106) of the mold (102), and optionally,
wherein the desired gap is between, and inclusive of, 0.1 centimeters (cm) and 1.5 cm.

6. The method (700) according to any preceding claim, wherein one or more of:
the second resin (140), when introduced into the mold (102), fills the interstitial space (132); and
the low-density spheres (120) have a density of between, and inclusive of, 0.005 g/cm³ and 0.6 g/cm³, such as between, and inclusive of, 0.05 g/cm³ and 0.4 g/cm³.

7. The method (700) according to any preceding claim, wherein the first pre-made component (104A) and the second pre-made component (104B) are pre-made components of a plurality of pre-made components, loading the first pre-made component (104A) into the mold (102) comprises loading the plurality of pre-made components (104) into an interior cavity (124) of the mold (102), and wherein, when loaded into the interior cavity (124) of the mold (102) the plurality of pre-made components (104) occupy at least 25% of a total volume of the interior cavity (124).

8. The method (700) according to any preceding claim, further comprising:
forming a third pre-made component (104C), wherein the third pre-made component (104C) has at least one of:
a density higher than a density of the first pre-made component (104A) and the second pre-made component (104B);
a strength greater than a strength of the first pre-made component (104A) and the second pre-made component (104B); or
a durability greater than a durability of the first pre-made component (104A) and the second pre-made component (104B); and
loading the third pre-made component (104C) into the mold (102), wherein the interstitial space (132) is further defined between the third pre-made component (104C) and at least one of the first pre-made component (104A) and the second pre-made component (104B), and optionally,
wherein:
the third pre-made component (104C) is a third pre-made component (104C) of a plurality of additional pre-made components (104C); and
the plurality of additional pre-made components (104C) are loaded into the mold (102) such that the plurality of additional pre-made components (104C) are closer to the inner perimeter (106) of the mold (102) than the first pre-made component (104A) and the second pre-made component (104B) are to the inner perimeter (106) of the mold (102).

9. A syntactic-foam part (142), comprising:
pre-made components (104) each comprising low-density spheres (120) at least partially embedded in a first resin (138), wherein the pre-made components (104) are arranged so that an interstitial space (132) is defined between at least two adjacent ones of the pre-made components (104); and
a second resin (140) located within the interstitial space (132) and which binds together the pre-made components (104).

10. The syntactic-foam part (142) according to claim 9, further comprising second low-density spheres (128) within the interstitial space (132) and embedded within the second resin (140) such that the second resin (140) and the second low-density spheres (128) fill the interstitial space (132).

11. The syntactic-foam part (142) according to claim 9 or claim 10, further comprising a spacer (116) extending from a side (118) of a first pre-made component (104A) of the pre-made components (104) and contacting a side (130) of a second pre-made component (104B) of the pre-made components (104), and optionally,
wherein the spacer (116) provides at least one thermal conductivity or electrical conductivity between the first pre-made component (104A) and the second pre-made component (104B).

12. The syntactic-foam part (142) according to any of claims 9 - 11, wherein:
the syntactic-foam part (142) further comprises a number of additional pre-made components (104C); and
each one of the number of additional pre-made components (104C, 104D) has at least one of:
a density higher than a density of the pre-made components (104);
a strength greater than a strength of the pre-made components (104); or
a durability greater than a durability of the pre-made components (104); and
a distance (134) between each one of the number of additional pre-made components (104C) and an outer surface (112) of the syntactic-foam part (142) is less than a distance (136) between any one of the pre-made components (104) and the outer surface (112) of the syntactic-foam part (142).

13. The syntactic-foam part (142) according to any of claims 9 - 12, wherein one or more of:
each one of the pre-made components (104) has a shape the same as or substantially similar to one of a triangular prism, a pyramid, a rectangular prism, a bar, a cylinder, a sphere, a dodecahedron, a hexagonal prism, or a cuboid; and
at least one of the pre-made components (104) comprises an electronic component (144).

14. The syntactic-foam part (142) according to any of claims 9 - 13, wherein one or more of:
the low-density spheres (120) are hollow or substantially hollow; and
the low-density spheres (120) have a density of between, and inclusive of, 0.005 g/cm³ and 0.6 g/cm³, such as between, and inclusive of, 0.05 g/cm³ and 0.4 g/cm³.

15. The syntactic-foam part (142) according to any of claims 9 - 14, wherein at least one of the pre-made components (104) has a shape that is different than an overall shape of the syntactic-foam part (142).
